# EUROPEAN PATENT SPECIFICATION

(11) **EP 0 998 206 B1**
(45) Date of publication and mention of the grant of the patent: **06.05.2004**
(21) Application number: 98936443.5
(22) Date of filing: 24.07.1998
(51) Int. Cl.: A23L 1/09, A23L 1/308, A61K 31/715, A61K 31/56, A61K 35/78

(54) **FUNCTIONAL FOOD PREPARATE**
FUNKTIONELLE LEBENSMITTELZUBEREITUNG
PREPARATION D'ALIMENT FONCTIONNEL

(30) Priority: 25.07.1997 FI 973108
(43) Date of publication of application: 10.05.2000
(73) Proprietor: OY Borago AB, 02130 Espoo (FI); Oriola, OY, 02200 Espoo (FI)
(72) Inventor: MÄKELÄ, Helena, FIN-00340 Helsinki (FI); KAURALA, Marita, FIN-02320 Espoo (FI); RAUTIO, Pia, FIN-03600 Karkkila (FI)
(74) Representative: Saijonmaa, Olli-Pekka
(86) International application number: PCT/FI1998/000605
(87) International publication number: WO 1999/007239

(56) References cited:
- WO-A-93/23069
- WO-A-96/03150
- US-A- 5 424 331
- WPI/DERWENT'S ABSTRACT, No. 91-031795, week 9105; & JP,A,02 295 462 (NAKAMURA T) 6 December 1990.
- WPI/DERWENT'S ABSTRACT, No. 89-035952, week 8925; & JP,A,63 309 183 (ICHIMARU PHARCOS INC) 16 December 1988.
- WPI/DERWENT'S ABSTRACT, No. 87-133234, week 8725; & JP,A,62 074 259 (ZENKOKU SHOKUBUTSU) 6 April 1987.

## Description

This invention relates to a functional food preparation, which is based mainly on vegetal ingredients and is particularly intended to alleviate problems related with menopause in women.

The chief feature of the functional food preparation of the invention is the combination of fructooligosaccharides and vegetal phyto-oestrogens of various types in the same product, which is easy to use as a food supplement.

Fructooligosaccharides are chain-like carbohydrates consisting of a chain formed of fructosyl units with a glucosyl at the end, or of a fructosyl chain alone. By the chain length, i.e. the number of fructosyl units, fructooligosaccharides are divided into oligofructoses having a shorter chain, of which 1-kestose and nystose can be given as examples, an inulin having a longer chain (a common designation for fructooligosaccharides, which may contain up to 60 fructosyl units). Many cultivated vegetables, such as sugar-beet, chicory, Jerusalem artichoke, asparagus, onion, garlic, banana and tomato, contain fructooligosaccharides in abundance, however, fructooligosaccharides can also be produced synthetically.

Fructooligosaccharides are known to have a prebiotic effect, which means that they enhance selectively the growth of useful *Bifidobacteria* and *Lactobacilli* which produce acid in the intestines. Fructooligosaccharides also reduce the pH in the intestines, thus inhibiting the growth of pathogenetic bacteria and maintaining optimal bacterial balance for human health. Other known effects of fructooligosaccharides on humans is an increase in excrements and a decrease in blood fat values and cholesterol level.

Since digestive enzymes such as alpha-amylase, sucrase and maltase are not capable of decomposing fructooligosaccharides to any notable extent, and only the specific types of bacteria mentioned above utilise them selectively, fnictooligosaccharides have been used as low-calorie sweetening agents in foodstuffs. However, owing to the prebiotic and other useful effects mentioned above, fructooligosaccharides have a potential of being used more extensively especially as a food supplement to enhance intestinal activity.

JP Patent Application 60133852, filed on 17 July 1985, describes a fermentated soybean product with a caseous consistency, a "natto product", to which fructooligosaccharide has been added and which is said to be health promoting in accelerating the growth of *Bifidobacteria* in the intestines. A similar product made of soya milk and containing added fructooligosaccharide has also been described in JP Patent Application 62036158, filed on 17 February 1987.

JP Patent Application 2295462, filed on 6 December 1990, also discloses a vegetal ceraceous product, to which fructooligosaccharide has been added and which is said to promote metabolism and to prevent deseases, and JP Patent Application 63063366, filed on 19 March 1988, discloses a vegetable dessert paste which contains fructooligosaccharide and is used to cure intestinal problems and constipation.

WO 96 03150 discloses dietary fiber-polyphenol compositions wherein both the dietary fiber and the polyphenols are useful for treatment of gastrointestinal disorders.

Soya has the characteristic of containing phyto-oestrogens in abundance, more specifically daidzein and genistein, belonging to the isoflavonoids. Phyto-oestrogens are hormone-like compounds occurring naturally in certain plants and greatly ressembling the oestrogens produced by the female organism. It is known that vegetal phyto-oestrogens are converted in the intestines by the fermentation maintained by intestinal bacteria into substances having a similar effect as that of the oestrogens produced by the human organism. Thus, it is possible to alleviate problems connected with the menopause in women by adding phyto-oestrogens to the food, substituting these for synthetic oestrogen drugs. As a matter of fact, in countries where the food traditionally contains soybean products in abundance, women have significantly less menopause symptoms than in countries where the food is poor in phyto-oestrogens. Phyto-oestrogens prevent "hot flushes", prevent vaginal dryness and have also been confirmed to have an anti-depressive effect. Phyto-oestrogens also delay bone fragility, thus reducing the risk of contracting osteoporosis.

Except in soya, there is an abundance of phyto-oestrogens in flaxseed, which contains secoisolariciresinol and matairesinol belonging to lignans. In addition, many other plants, such as some cereal crops contain phyto-oestrogen in minor concentrations.

Owing to the known effects of phyto-oestrogens mentioned above, there is an abundance of functional food preparations on the market, in which especially soya, but also flaxseed constitute a chief ingredient. One typical such preparation consists of vegetal ingredients in the form of a finely or coarsely divided powder which contains soya flour or crushed flaxseed, or preferably both, and which is intended for use as a drink mixed in a liquid. Such a particulate preparation can also be used as a supplement to be mixed in other foodstuffs, such as yoghurt and various cereals and flakes. Besides phyto-oestrogens, the preparation is rich in fibres and polyunsaturated fatty acids, thus allowing the need for synthetic oestrogen drugs to be avoided during the menopause.

The purpose of this invention is to provide a functional food preparation combining the beneficial effects of fructooligosaccharides and vegetal phyto-oestrogen.

In this conjunction, the invention aims at the joint effect of fructooligosaccharides and phyto-oestrogens of various types simultaneously obtained in the human organism with one and the same food preparation, so that the growth especially of the useful *Bifidobacteria* in the intestines enhances the intestinal activity and thus boosts the conversion of phyto-oestrogens into a form usable by the intestines and their absorption into the human body. Moreover, a special purpose of the invention is to provide a preparation which is easy to use as a food supplement, mixed in various foodstuffs or drinks. Thus, the preparation of the invention is characterised by being a mixture of components in the form of solid, finely divided particles, which contains fructooligosaccharide with a prebiotic effect combined with a vegetal substance containing phyto-oestrogens, which consists of soya flour containing flavonoids and crushed flaxseed containing lignan.

The phyto-oestrogens contained in the vegetal ingredients of the preparation in accordance with the invention, i.e. the lignans contained in flaxseed and the flavonoids contained in soya, are clearly different, the components being thus complementary in increasing the spectrum of different phyto-oestrogens in the preparation and boosting their action, compared to a preparation containing phyto-oestrogens of one single type. The crushing of the flaxseed is indispensable in order to break the husks and to release lignans for use by the digestive system.

The preparation of the invention can be prepared in a manner known *per se* forming a mixture consisting of vegetal components, which can be mixed for instance in water, sour milk or juice, forming a drink consumed as such. With the adequate use of crushed flaxseed containing lignans and soya flour containing isoflavonoids, the phyto-oestrogen concentration of the preparation can be controlled within the range from 0.05 to 0.6% by weight, preferably 0.01 to 0.4% by weight. Other vegetal flavouring and colouring ingredients, preferably containing vitamins and minerals, such as dried rosehip or lingonberry can be further added to the preparation. Besides vegetal ingredients, fructooligosaccharide, such as e.g. inulin, is included in the preparation, preferably in a ratio of 5 to 30% by weight and most preferably 10 to 20% by weight. These concentrations have been selected so that a daily intake of the preparation meets the daily need, which is estimated at 1 to 10 g/day, preferably 2.5 to 10 g/day. Powdery inulin can be obtained for instance by extracting sugar-beet or chicory.

In accordance with the invention, other preferred foodstuffs are mixtures of finely divided vegetal components, consisting of 50 to 60% by weight of soya flour, 15 to 30% by weight of crushed flaxseed, 15 to 25% by weight of dried rosehip or lingonberry and 10 to 20% by weight of fructooligosaccharide.

The invention is explained in greater detail below with the aid of a number of exemplifying compositions of the food preparation in accordance with the invention.

| **Example 1** | |
|---|---|
| Lecithinised soya flour | 54% |
| Dried rosehip | 20% |
| Crushed flaxseed | 16% |
| Inulin/Frutafit® | 10% |

| **Example 2** | |
|---|---|
| Low-fat soya flour | 40% |
| Inulin/ Frutafit® | 15% |
| Rosehip | 15% |
| Full-fat soya flour | 10% |
| Crushed flaxseed | 10% |
| Dried lingonberry powder | 5% |
| Canderel sweetener | 5% |

| **Example 3** | |
|---|---|
| Low-fat soya flour | 50% |
| Rosehip | 13% |
| Crushed flaxseed | 10% |
| Fibrex sugar-beet flakes | 10% |
| Raw cane sugar | 10% |
| Inulin/ Frutafit® | 7% |

| **Example 4** | |
|---|---|
| Lecithinised soya flour | 45% |
| Crushed flaxseed | 16% |
| Fructooligosaccharide/Actilight® | 15% |
| Dried lingonberry powder | 12% |
| Canderel sweetener | 12% |

| **Example 5** | |
|---|---|
| Lecithinised soya flour | 52% |
| Carob powder | 14% |
| Crushed flaxseed | 13% |
| Fructooligosaccharides/Actilight® | 11% |
| Raw cane sugar | 10% |

**Product data on the mixture components used:**
**Lecithinised soya flour**
   - preheated
   - colour: from yellowish to light brown
   - granulation: min. 95% through #325 mesh US St.Sieve (0.045)
   - fat content 8% (lecithin)
   - protein content: 49% of the dry substance
   - energy content: 1600kJ/100 g
   - highly miscible with liquids
**Full-fat soya flour**
   - preheated
   - energy content 1880 kJ/100 g
   - protein content min. 36% of the dry substance
   - fat content min. 18% of the dry substance
   - fibre content min. 3 % of the dry substance
   - trypsin inhibitors: max. 10.0 TIU/mg
   - colour: light yellow
   - granulation: less than 0.67 mm, 95%
**Low-fat soya flour**
   - preheated
   - energy content 1591 kJ/100 g
   - protein content min. 47%
   - fat content max. 2.0%
   - fibre content max. 3%
   - trypsin inhibitors: max. 10.0 TIU/mg
   - colour: light yellow
   - granulation: less than 0.075 mm
**Lingonberry powder**
   - dried
   - a strong taste of lingonberry
**Canderel sweetener**
   - an aspartame-based sweetener
   - aspartame content 3%
   - a light powder
   - colour: white
   - sweetness value: the sweetness of 1 dl equals 1 dl of ordinary sugar
   - energy content: 410 kcal/100 g, 40 kcal/1 dl
**Dried rosehip**
   - prepared from mature rosehips, from which the interior seeds have been removed. The berries have been rapidly dried using hot-air drying, resulting in optimal conservation of the vitamin C concentration.
**Crushed flaxseed**
   - prepared from flaxseed from which the major portion of the oil has been removed (defatted)
   - fat content 17%
   - protein content 30%
   - fibre content 32%
**Inulin**
   - trade name: Frutafit®
   - separated from fresh chicory roots
   - a white powder
   - colour: white
   - pH: neutral
   - particle size 20<80%<130 µm
   - solubility: excellent
   - dry matter content: ≥ 96%
   - carbohydrate content of dry substance ≥99.0% of which inulin ≥90.0% and monosaccharides and disaccharides ≤10%
**Fructooligosaccharide**
   - trade name: Actilight®
   - separated from sugar-beet
   - powdery
   - fructooligosaccharide content 95%
   - energy content: 200 kcal/100 g
**Fibrex sugar-beet flakes**
   - a flaky structure resembling rye flakes
   - prepared from sugar-beet by physical means
   - fibre content: 73%
   - fibre: 1/3 water-soluble, gelling
   - energy content: 225 kJ/100 g
   - protein content: 10%
   - pH 4.5 ± 0.5
   - particle size: 0.5-2.0 mm
**Raw sugar cane**
   - prepared by crystallising pressed sugar cane juice
   - contains minerals such as iron and calcium
   - colour: brown
   - crystal: coarser than that of brown sugar, for instance
   - dissolution time of 10 minutes in a cold drink

## Claims

1. A functional food preparation, **characterised in that** it is a mixture of components in the form of solid, finely divided particles, containing fructooligosaccharide with a prebiotic effect combined with a vegetal substance containing phyto-oestrogen, which consists of soya flour containing flavonoids and crushed flaxseed containing lignan.

2. A preparation as claimed in claim 1, **characterised in that** the fructooligosaccharides account for 5 to 30% by weight, preferably 10 to 20% by weight of the preparation.

3. A preparation as claimed in claim 1 or 2, **characterised in that** the fructooligosaccharide is inulin.

4. A preparation as claimed in any of the preceding claims, **characterised in that** the phyto-oestrogens account for 0.05 to 0.6% by weight, preferably 0.1 to 0.4% by weight of the preparation.

5. A preparation as claimed in any of the preceding claims, **characterised in that** it contains dried rosehip or lingonberry.

6. A preparation as claimed in claim 5, **characterised in that** it contains 50 to 60% by weight of soya flour, 15 to 30% by weight of crushed flaxseed, 15 to 25% by weight of dried rosehip or lingonberry and 10 to 20% by weight of fructooligosaccharide.

## Patentansprüche

1. Funktionelle Lebensmittelzubereitung **dadurch gekennzeichnet, dass** sie eine Mischung aus Komponenten in Form von festen, fein verteilten Teilchen ist, die Fructooligosaccharid mit einer präbiotischen Wirkung zusammen mit einer vegetabilischen Substanz mit Phytoöstrogenen enthält, die aus Sojamehl mit Flavonoiden oder Leinsamenschrot mit Lignan besteht.

2. Zubereitung nach Anspruch 1, **dadurch gekennzeichnet, dass** die Fructooligosaccharide 5 bis 30 Gew.-%, vorzugsweise 10 bis 20 Gew.-% der Zubereitung ausmachen.

3. Zubereitung nach Anspruch 1 oder 2, **dadurch gekennzeichnet, dass** das Fructooligosaccharid Inulin ist.

4. Zubereitung nach einem der vorstehenden Ansprüche, **dadurch gekennzeichnet, dass** die Phytoöstrogene 0,05 bis 0,6 Gew.-%, vorzugsweise 0,1 bis 0,4 Gew.-% der Zubereitung ausmachen.

5. Zubereitung nach einem der vorstehenden Ansprüche, **dadurch gekennzeichnet, dass** sie getrocknete Hagebutte oder Preiselbeere enthält.

6. Zubereitung nach Anspruch 5, **dadurch gekennzeichnet, dass** sie 50 bis 60 Gew.-% Sojamehl, 15 bis 30 Gew.-% Leinsamenschrot, 15 bis 25 Gew.-% getrocknete Hagebutte oder Preiselbeere und 10 bis 20 Gew.-% Fructooligosaccharid enthält.

## Revendications

1. Préparation d'aliment fonctionnel, **caractérisée par le fait que** c'est un mélange de composants sous la forme de particules solides finement divisées, qui contiennent du fructooligosaccharide avec un effet prébiotique combiné avec une substance végétale contenant du phyto-oestrogène, qui consiste en farine de soja contenant des flavonoïdes et des graines de lin broyées contenant du lignane.

2. Préparation selon la revendication 1, **caractérisée par le fait que** les fructooligosaccharides représentent 15 à 30 % en poids, de préférence 10 à 20% en poids de la préparation.

3. Préparation selon la revendication 1 ou 2, **caractérisée par le fait que** le fructooligosaccharide est de l'inuline.

4. Préparation selon l'une quelconque des revendications précédentes, **caractérisée par le fait que** les phyto-oestrogènes représentent 0,05 à 0,06 % en poids, de préférence 0,1 à 0,4 % en poids de la préparation.

5. Préparation selon l'une quelconque des revendications précédentes, **caractérisée par le fait qu'**elle contient du fruit de rosier séché ou de l'airelle.

6. Préparation selon la revendication 5, **caractérisée par le fait qu'**elle contient 50 à 60 % en poids de farine de soja, 15 à 30 % en poids de graines de lin broyées, 15 à 25 % en poids de fruit de rosier séché ou de l'airelle et 10 à 20 % en poids de fructooligosaccharide.
